# EUROPEAN PATENT APPLICATION

(11) **EP 4 398 597 A1**
(43) Date of publication of application: **10.07.2024**
(21) Application number: 21955735.2
(22) Date of filing: 05.11.2021
(51) Int. Cl.: H04R 1/08, H04R 9/02

(54) **PICKUP, COMMUNICATION DEVICE, AND COMMUNICATION APPARATUS**

(30) Priority: 02.09.2021 CN 202111026882
(71) Applicant: Sonitus Medical (Shanghai) Co., Ltd., Pudong District Shanghai 201321 (CN)
(72) Inventor: JI, Yang, Shanghai 201321 (CN); ZHANG, Weiqiang, Shanghai 201321 (CN); PU, Qiangling, Shanghai 201321 (CN)
(74) Representative: Schröer, Gernot H.
(86) International application number: PCT/CN2021/129063
(87) International publication number: WO 2023/029206

(57) **Abstract**

A pickup. The pickup is configured to be mounted to a bone conduction organ in the mouth; the pickup comprises a detection module; the detection module is configured to detect a vibration signal of the bone conduction organ.

## Description

### Technical Field

The present application relates to but is not limited to the field of speech signal processing technologies, and in particular relates to but is not limited to a pickup, a communication device and a communication apparatus.

### Background

A communication apparatus usually uses a microphone to collect a sound signal. The microphone needs to collect sound through air vibration, so it is more difficult to design the waterproofing of a cavity structure of the microphone in places that require a high level of waterproof. In addition, in a high-noise environment, a sound signal collected by the microphone has low signal-to-noise ratio, and the sound quality is poor.

### Summary

The following is a summary of the subject matter described in detail herein. This summary is not intended to limit the protection scope of the claims.

A pickup is configured to be mounted to a bone conduction sound transmitting organ in a mouth. The pickup includes a detection module, and the detection module is configured to detect a vibration signal of the bone conduction sound transmitting organ.

A communication device includes a signal receiving module, a control module and a communication module. The control module is configured to be electrically connected with the signal receiving module and the communication module and capable of controlling the operation of the signal receiving module and the communication module. The signal receiving module is configured to be capable of receiving the signal of the aforementioned pickup, and the communication module is configured to be capable of transmitting the signal of the signal receiving module outward.

A communication apparatus includes the aforementioned pickup and the aforementioned communication device.

Other aspects will become apparent after reading and understanding the drawings and detailed description.

### Brief Description of Drawings

The drawings are used for providing a further understanding of technical solutions of the present application, and constitute a part of the specification. They are used together with embodiments of the present application to explain the technical solutions of the present application, and do not constitute a restriction on the technical solutions of the present application.
FIG. 1 is a schematic structural diagram of a pickup in a state of use according to some exemplary embodiments of the present application;
FIG. 2a is a first schematic structural diagram of a pickup in a state of use according to some other exemplary embodiments of the present application;
FIG. 2b is a second schematic structural diagram of a pickup in a state of use according to some other exemplary embodiments of the present application;
FIG. 3 is a third schematic structural diagram of a pickup in state of use according to yet some other exemplary embodiments of the present application;
FIG. 4 is a block diagram of a circuit structure of a pickup according to an embodiment of the present application; and
FIG. 5 is a block diagram of a circuit structure of a communication apparatus according to an embodiment of the present application.

### Reference signs:

100-pickup;
1-detection module, 2-housing, 3-fixing sleeve, 4-clamping member, 5-bonding part, 7-circuit board, 8-power supply module;
200-bone conduction sound transmitting organ;
300-communication device;
6-signal receiving module, 7-control module, 8-communication module.

### Detailed Description

Embodiments of the present application will be described below with reference to the drawings. It should be noted that the embodiments in the present application and the features in the embodiments may be arbitrarily combined with each other if there is no conflict.

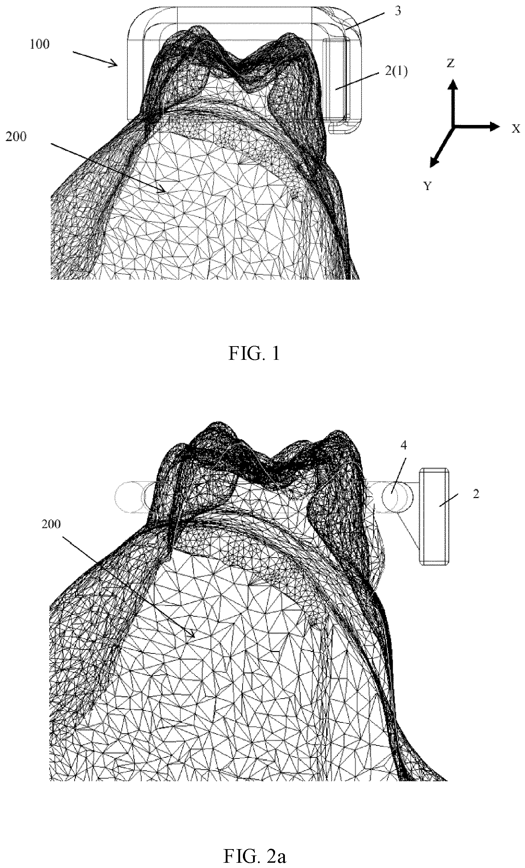

An embodiment of the present application provides a pickup 100, as shown in FIGS. 1-3, the pickup 100 is configured to be mounted on a bone conduction sound transmitting organ 200 in an oral cavity. The bone conduction sound transmitting organ 200 may be a tooth or an alveolar bone or other organ, and the pickup 100 may be mounted on the bone conduction sound transmitting organ 200 in a stress-coupled manner. The pickup 100 includes a detection module 1, and a vibration signal of the bone conduction sound transmitting organ 200 is detected and collected through the detection module 1.

Compared with an air conduction microphone with the conversion from mechanical energy to electrical energy being completed by the vibration of air reaching the microphone, the pickup 100 of an embodiment of the present application directly collects the vibration signal on the bone conduction sound transmitting organ 200 provided in the oral cavity. When a person speaks, vibration of vocal cord drives vibration of skull, and the vibration of skull drives vibration of the bone conduction sound transmitting organ 200 in the oral cavity, such as a tooth or an alveolar bone. The bone conduction vibration energy generated on the skull is far greater than the air conduction vibration energy. Therefore, the vibration signal of tooth or alveolar bone collected by the detection module 1 is better than the signal collected by ordinary air conduction microphone and better than the signal collected by percutaneous bone conduction, so that the pickup 100 has the technical effect of high-definition pickup.

In addition, the detection module 1 for detecting the vibration signal of the bone conduction sound transmitting organ 200 is not sensitive to air vibration, but only sensitive to a solid vibration signal. Thus, there is no need to design an air conduction path structure, so that the waterproof design of the pickup 100 is easy to realize, and it has unique advantages for collecting vibration bone conduction speech signals in a high noise environment, and can collect self-bone conduction high-definition sound signals in the high noise environment.

In some exemplary embodiments, the detection module 1 includes at least one acceleration sensor. The acceleration sensor is a kind of sensor that can measure acceleration, which can be composed of a mass block, a damper, an elastic element, a sensitive element and an adaptive circuit and so on. According to difference in sensitive elements of the sensors, the acceleration sensors include a capacitive type sensor, an inductive type sensor, a strain type sensor, a piezoresistive type sensor, a piezoelectric type sensor, etc. The types of sensors are not limited herein.

Since the acceleration sensor is only sensitive to vibration signals, there is no need to design the air conduction path structure. Since the acceleration sensor does not require a design of air conduction path structure, the waterproof design of the pickup 100 is particularly easy, thereby simplifying the design and reducing the manufacturing cost. The acceleration sensor is sensitive to solid vibration and insensitive to air vibration, so it has unique advantages for collecting vibration bone conduction speech signals in a high noise environment.

At least one acceleration sensor is provided to detect vibration in at least one of a first direction, a second direction, and a third direction. That is, vibration signals in only one direction can be detected, vibration signals in two directions can be detected, or vibrations in all three directions can be detected, thereby improving flexibility in use of the pickup 100. The first direction, the second direction and the third direction are pairwise perpendicular to each other, that is, the first direction, the second direction and the third direction together form a three-dimensional coordinate system in space. As shown in FIG. 1, the first direction may be set as X direction (a direction that the human body faces, that is, a front and back direction), the second direction may be set as Y direction (a width direction of the human body, that is, a left and right direction), and the third direction may be set as Z direction (a height direction of the human body, that is, an up and down direction).

For example, at least one acceleration sensor can achieve a vibration detection in three directions, that is, the first direction, the second direction, and the third direction, and then combine the vibration signals in the three directions, so that the sound can be reproduced well, and has a certain degree of clarity.

In some exemplary embodiments, in order to realize the above-described detection of vibration signals in different directions, the acceleration sensor may be provided as one of a single-axis acceleration sensor, a two-axis acceleration sensor, or a three-axis acceleration sensor, or a combination of several acceleration sensors, and multiple acceleration sensors may be mounted on the bone conduction sound transmitting organ 200 in a superimposed manner. The single-axis acceleration sensor and three-axis acceleration sensor have their own advantages. The single-axis acceleration sensor has stronger directivity, while the three-axis acceleration sensor can superimpose and organize all vibration signals to realize signal collection with good reproduction effect, natural sound quality, good balance, and high fidelity.

In some exemplary embodiments, the detection module 1 includes multiple acceleration sensors with different bandwidths (different operating frequency bands) for detecting vibrations in the same direction (which may be one direction or two directions or three directions).

For example, for the first direction (such as X direction), two acceleration sensors with different bandwidths (which can be single-axis acceleration sensors) are used to collect low frequency and medium-high frequency signals along X direction, or medium-low frequency and high frequency signals respectively. The coordination of acceleration sensors with different bandwidths realizes the full-frequency detection of signals in a set direction, improves the detection bandwidth and the detection accuracy. A certain overlap of frequency values can be set between the detection frequencies of multiple bandwidths to avoid frequency leakage.

For example, for the first direction (e.g. X direction) and the second direction (e.g. Y direction), two acceleration sensors (which may be single-axis acceleration sensors) with different bandwidths are used in each direction to collect low frequency and medium-high frequency signals in X direction and low frequency and medium-high frequency signals in Y direction respectively, or to collect medium-low frequency and high frequency signals in X direction and medium-low frequency and high frequency signals in Y direction respectively. Operating frequency bands of the acceleration sensors for collecting low frequency or medium-low frequency signals in two directions may be configured to be the same or different, and operating frequency bands of the acceleration sensors for collecting high frequency or medium-high frequency signals in two directions may be configured to be the same or different.

Alternatively, for the first direction (e.g. X direction) and the second direction (e.g. Y direction), two acceleration sensors (which may be two-axis acceleration sensors) with different bandwidths may be used to collect low frequency signals along X direction and Y direction, and medium-high frequency signals along X direction and Y direction, or collect medium-low frequency signals along X direction and Y direction, and high frequency signals along X direction and Y direction, respectively.

It should be understood that the detection module may use other vibration sensors, such as a piezoelectric sensor, which can detect vibration, in addition to using the acceleration sensor(s) to collect a vibration signal of a tooth or alveolar bone.

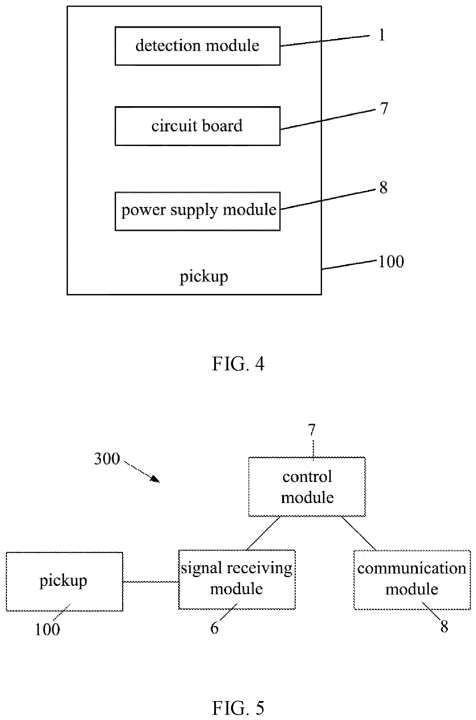

In some exemplary embodiments, as shown in FIGS. 1 and 4, the pickup 100 further includes a housing 2, a circuit board 7, and a power supply module 8. The detection module 1, the power supply module 8, and the circuit board 7 are all mounted in the housing 2, thereby improving the integrity of the pickup 100 and facilitating the mounting or storage of the pickup 100.

The circuit board 7 is electrically connected with the detection module 1 and controls the operation of the detection module 1, and the power supply module 8 is configured to supply power to the circuit board 7 and the detection module 1.

In some exemplary embodiments, as shown in FIG. 1, the pickup 100 further includes a fixing sleeve 3 on which the housing 2 is fixed. The fixing sleeve 3 may be selectively made of elastic plastic material, and the housing 2 is fixed on the inner wall face or the outer wall face of the fixing sleeve 3. As shown in FIG. 1, the fixing sleeve 3 is configured to be sleeved on a tooth (such as a dental crown), that is, the fixing sleeve 3 and the tooth form a concave-convex-like plug-in fit, so that the pickup 100 is firmly mounted and has an aesthetic appearance.

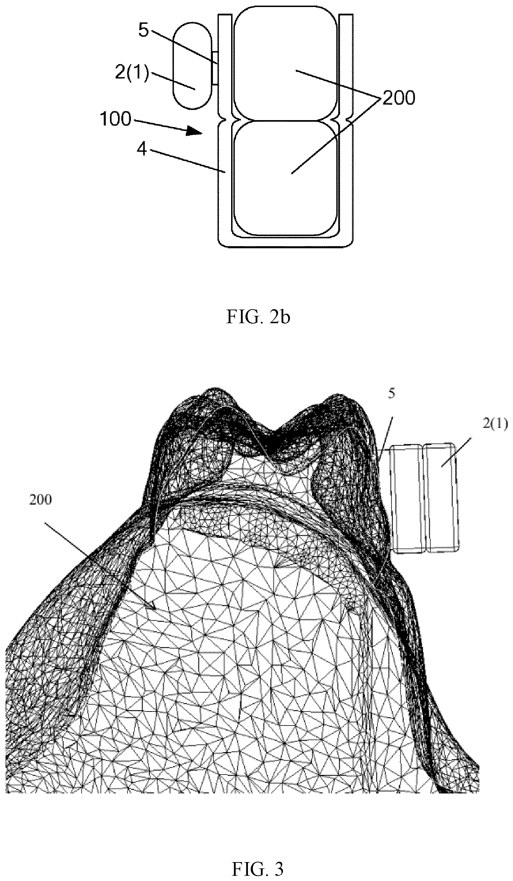

In some other exemplary embodiments, as shown in FIGS. 2a and 2b, the pickup 100 further includes a clamping member 4, and the housing 2 is secured to the clamping member 4. The clamping member 4 may be provided as a metal or non-metal elastic clamping member (for example, the clamping member 4 may be a steel tube structure), and the clamping member 4 is provided around a tooth (for example, a dental crown), that is, the clamping member 4 is clamped to the tooth, so that the mounting stability of the pickup 100 can be improved. The housing 2 may be bonded to the clamping member 4 by a bonding part 5 or fixed to the clamping member 4 by other means.

In yet some other exemplary embodiments, as shown in FIG. 3, a bonding part 5 is provided on the housing 2, and a side of the bonding part 5 close to the tooth (such as the dental crown) fits with the external surface of the tooth so as to be bonded and fixed with the tooth and improve the mounting firmness.

The various mounting modes of the pickup 100 may increase the variety of product styles, thereby satisfying the usage habits and needs of different users.

In another embodiment of the present application, as shown in FIG. 5, a communication device 300 is provided, including a signal receiving module 6, a control module 7 and a communication module 8. Both of the signal receiving module 6 and the communication module 8 are electrically connected with the control module 7, and the control module 7 can control the operation of the signal receiving module 6 and the communication module 8. The signal receiving module 6 is configured to receive the signal of the pickup 100, and the communication module 8 is configured to transmit the signal of the signal receiving module 6 outward, thereby realizing the effective transmission of information.

The communication device 300 may receive the vibration signal detected by the detection module 1 of the pickup 100 and transmit the signal of the signal receiving module 6 outward through the communication module 8. At this time, the signal-to-noise ratio of the transmitted sound signal is high, and the interference of noise is reduced.

In some exemplary embodiments, the communication device 300 may be configured as an interphone and the communication module 8 may be configured to send and receive signals thereby enabling effective bi-directional transmission of information.

In some cases of interphone, it is necessary to collect sound signals conducted by air vibration through a microphone. The collected signals have serious noise interference. However, the acceleration sensor in the pickup 100 is sensitive to solid vibration signals and is insensitive to the noise caused by the ambient air disturbance, so that it can collect bone conduction signals of speakers in a high noise environment, and has excellent cost-effectiveness.

In some exemplary embodiments, the control module 7 is configured to place the interphone in a transmitting mode when a signal received by the signal receiving module 6 (i.e. a vibration signal detected by the detection module 1 of the pickup 100) coincides with a preset transmitting switch signal, and place the interphone in a receiving mode when the signal received by the signal receiving module 6 is inconsistent with the preset transmitting switch signal.

The interphone has two modes: transmitting and receiving. In the transmitting mode, user can speak and send his/her own words to others, and in the receiving mode, the user can listen to other people's speeches. In some cases of interphone, it has a call button. After pressing the call button, the interphone is in the transmitting mode, and after releasing the call button, the interphone is in the receiving mode.

In an interphone according to an embodiment of the present application, a transmitting switch signal is preset in the control module 7 of the interphone. When a user makes a specific sound, such as a regular sound (using the tongue to make tsk-tsk sounds or by teeth tapping, etc.), the detection module 1 of the pickup 100 can detect the sound signal and transmit it to the interphone. The control module 7 of the interphone can compare the signal with the preset transmitting switch signal. When the two signals are consistent, the control module 7 controls the interphone to be in the transmitting mode, and when the two signals are inconsistent, the control module 7 controls the interphone to be in the receiving mode.

The interphone is controlled to be in the transmitting mode or receiving mode by sound signals, which is convenient for people (or in special scenes) who have no hands or are inconvenient to control the interphone with hands, and improves the ease of use and the application range of the communication device 300.

It should be understood that the communication device 300 may be a device other than an interphone, for example, an extracorporeal device such as a mobile phone, an earphone, or the like.

In another embodiment of the present application, a communication apparatus is also provided. The communication apparatus includes the aforementioned pickup 100 and the aforementioned communication device 300.

In the description of the present application, it should be noted that the orientation or position relationships indicated by the terms "upper", "lower", "one side", "the other side", "one end", "the other end", "edge", "relative", "four corners", "periphery" and "square structure" or the like are based on the orientation or position relationships shown in the drawings, which are only for convenience of describing the present application and simplifying the description, rather than indicating or implying that the structure referred has a specific orientation, or is constructed and operated in the specific orientation, and thus cannot be interpreted as a limitation on the present application.

In the description of the present application, it should be noted that the term "multiple/a plurality of' refers to two or more.

In the description of embodiments of the present application, the terms "connection", "fixation", "mounting" and the like should be understood broadly, unless otherwise expressly specified and limited. For example, the term "connection" may be a fixed connection, may be a detachable connection, or may be an integrated connection. The term "connection" may be direct connection or indirect connection through an intermediate medium, or may be an internal communication between two elements. For those of ordinary skills in the art, the specific meanings of the aforementioned terms in the present application may be understood according to specific situations.

It may be understood by those of ordinary skills in the art that all or some steps in a method and function modules/units in a system and a device disclosed in the above description may be implemented as software, firmware, hardware, or an appropriate combination thereof. In a hardware implementation, division of the function modules/units mentioned in the above description does not necessarily correspond to division of physical assemblies. For example, a physical assembly may have multiple functions, or a function or a step may be executed by several physical assemblies in cooperation. Some assemblies or all assemblies may be implemented as software executed by a processor such as a digital signal processor or a microprocessor, or implemented as hardware, or implemented as an integrated circuit such as an application specific integrated circuit. Such software may be distributed in a computer-readable medium, and the computer-readable medium may include a computer storage medium (or a non-transitory medium) and a communication medium (or a transitory medium). As known to those of ordinary skill in the art, a term "computer storage medium" includes volatile and nonvolatile, and removable and irremovable media implemented in any method or technology for storing information (for example, computer-readable instructions, a data structure, a program module, or other data). The computer storage medium includes, but is not limited to, RAM, ROM, EEPROM, a flash memory, or another memory technology, CD-ROM, a Digital Versatile Disk (DVD) or another optical disk storage, a magnetic box, a magnetic tape, magnetic disk storage or another magnetic storage apparatus, or any other media that may be used for storing desired information and may be accessed by a computer. In addition, it is known to those of ordinary skills in the art that the communication medium usually includes computer-readable instructions, a data structure, a program module, or other data in a modulated data signal such as a carrier or another transmission mechanism, and may include any information delivery medium. Furthermore, when describing representative embodiments, the specification may have presented a method and/or process as a particular sequence of steps. However, to the extent that the method or process does not depend on the specific order of steps described herein, the method or process should not be limited to the specific order of steps described. As will be understood by those of ordinary skills in the art, other order of steps is also possible. Accordingly, a particular order of steps set forth in the specification should not be construed as limitations on the claims. Furthermore, the claims for the method and/or process should not be limited to the steps which are performed in the written order. Those skilled in the art can readily understand that these orders can be changed and the changed orders still remain within the spirit and scope of the embodiments of the present application.

Although implementations disclosed herein are described above, the described contents are only implementations used for facilitating understanding of the present application, and are not intended to limit the present application. Without departing from the spirit and scope disclosed herein, any person skilled in the art to which the present application pertains may make any modifications and changes in the form and details of implementation, but the scope of patent protection of the present application shall still be defined by the appended claims.

## Claims

1. A pickup configured to be mounted to a bone conduction sound transmitting organ in a mouth, the pickup comprising a detection module, and the detection module being configured to detect a vibration signal of the bone conduction sound transmitting organ.

2. The pickup according to claim 1, wherein the detection module comprises at least one acceleration sensor, and the at least one acceleration sensor is configured to detect vibration in at least one of a first direction, a second direction, and a third direction;
wherein the first direction, the second direction and the third direction are pairwise perpendicular to each other.

3. The pickup according to claim 2, wherein the acceleration sensor is a single-axis acceleration sensor, a two-axis acceleration sensor, or a three-axis acceleration sensor.

4. The pickup according to claim 1, wherein the detection module comprises a plurality of acceleration sensors with different bandwidths for detecting vibrations in the same direction.

5. The pickup according to any one of claims 1 to 4, wherein the pickup further comprises a housing, a circuit board and a power supply module; the detection module, the power supply module and the circuit board are all mounted in the housing, the circuit board is electrically connected with the detection module and controls the operation of the detection module, and the power supply module is configured to supply power to the circuit board and the detection module.

6. The pickup according to claim 5, wherein the pickup further comprises a fixing sleeve, the housing is fixed to the fixing sleeve, the bone conduction sound transmitting organ is a tooth, and the fixing sleeve is configured to be sleeved on the tooth; or
the pickup further comprises a clamping member, the housing is fixed to the clamping member, the bone conduction sound transmitting organ is a tooth, and the clamping member is configured to be clamped on the tooth; or
the housing is provided with a bonding part, and the bonding part is configured to be bonded to the bone conduction sound transmitting organ.

7. A communication device, comprising a signal receiving module, a control module, and a communication module, wherein the control module is configured to be electrically connected with the signal receiving module and the communication module and capable of controlling the operation of the signal receiving module and the communication module, the signal receiving module is configured to be capable of receiving the signal of the pickup according to any one of claims 1 to 6, and the communication module is configured to be capable of transmitting the signal of the signal receiving module outward.

8. The communication device according to claim 7, wherein the communication device is an interphone, and the communication module is configured to send and receive signals.

9. The communication device according to claim 8, wherein the control module is configured to place the interphone in a transmitting mode when the signal received by the signal receiving module coincides with a preset transmitting switch signal, and place the interphone in a receiving mode when the signal received by the signal receiving module is inconsistent with the preset transmitting switch signal.

10. A communication apparatus, comprising the pickup according to any one of claims 1 to 6 and the communication device according to any one of claims 7 to 9.
